# EUROPÄISCHE PATENTSCHRIFT

(11) **EP 2 218 971 B1**
(45) Veröffentlichungstag und Bekanntmachung des Hinweises auf die Patenterteilung: **20.04.2016**
(21) Anmeldenummer: 10001629.4
(22) Anmeldetag: 17.02.2010
(51) Int. Cl.: F24D 3/14, F24F 5/00, F24D 5/02

(54) **Temperierungssystem**
Tempering system
Système d'équilibrage des températures

(30) Priorität: 17.02.2009 EP 09002222
(43) Veröffentlichungstag der Anmeldung: 18.08.2010
(73) Patentinhaber: Santore, Karl, 25335 Neuendorf (DE); Ahlf, Günter, 25348 Glückstadt (DE)
(72) Erfinder: Santore, Karl, 25335 Neuendorf (DE); Ahlf, Günter, 25348 Glückstadt (DE)
(74) Vertreter: Glawe, Delfs, Moll

(56) Entgegenhaltungen:
- EP-A2- 0 931 986
- EP-A2- 2 218 970
- CA-A1- 2 567 669
- DE-A1- 2 109 049
- DE-A1- 3 014 390
- DE-U- 6 903 113
- DE-U1- 20 221 176
- FR-A1- 2 662 785
- GB-A- 2 326 468

## Beschreibung

Die vorliegende Erfindung betrifft ein Temperierungssystem für Gebäude gemäß dem Oberbegriff von Anspruch 1.

Bei einem solchen Temperierungssystem (DE 69 03113) sind keine Heizkörper mehr erforderlich. Es werden vielmehr die Wände beheizt. Es ist mit dem vorbekannten System auch möglich, die Wände zu kühlen. Dies hat verschiedene Vorteile.

Ähnlich wie bei einer Fußbodenheizung sind keine Platz einnehmenden und ästhetisch wenig ansprechenden Heizkörper erforderlich. Die Vorlauftemperatur kann wesentlich niedriger sein als bei Heizkörpern, oder einer Fußbodenheizung was es ermöglicht, das System mit Solarwärme, Erdwärme oder anderen Wärmequellen mit niedriger Temperatur zu betreiben. Die in das Heizsystem eingetragene Energie wird besonders effizient genutzt, da das Speichervermögen der Wände ausgenutzt wird. Gegenüber der Fußbodenheizung besteht dabei der Vorteil, dass mit den Wänden normalerweise wesentlich mehr Fläche für die Heizung zur Verfügung steht, als dies bei einer Fußbodenheizung der Fall ist. Gleichzeitig wird durch die Erwärmung der Außenwände der Transmissionsverlust des Gebäudes über die Außenwände reduziert. Auch bei der Kühlung bestehen Vorteile, indem Wände gleichmäßig gekühlt werden und der Luftzug einer Klimaanlage sowie starke übermäßige Kühlung vermieden werden.

Bei dem bekannten System werden Rohre in die Kanäle des Mauerwerks eingefügt und oben und unten mit Zulauf und Ablauf für das erwärmte Wasser versehen. Dies erfordert einerseits sehr großen Montageaufwand auf der Baustelle. Andererseits besteht wegen der großen Zahl von Verbindungen, die hergestellt werden müssen, die Gefahr, dass bei der Montage entstandene Undichtigkeiten übersehen werden. Weiterhin besteht nach der Teilmontage des Systems (Einzug der Rohre in die Wände und Einbetonieren der Vorlaufleitungen in die Decke) die Gefahr der Beschädigung der während der überwiegenden Bauzeit noch nicht durch Beton beziehungsweise Estrich geschützten Systemkomponenten (Rohre und Verbindungen).

Die Aufgabe der Erfindung besteht in der Schaffung eines Systems der eingangs genannt Art, dass an der Baustelle schneller, einfacher, sicherer und zuverlässiger hergestellt werden kann. Die Installation erfolgt während der Rohbauphase auf der Baustelle.

Bei einer Lösung der Aufgabe geht die Erfindung aus von einem Temperierungssystem für Gebäude mit in Wänden verlaufenden röhrenförmigen Kanälen, das von einer temperierten Flüssigkeit durchströmte Temperierrohre aufweist, die mit einem Zulauf und einem Ablauf verbunden sind, und die ein Außenrohr, das an seinem einen Ende geschlossen ist und an seinem anderen Ende mit dem Zulauf oder Ablauf verbunden ist, sowie ein darin koaxial angeordnetes Innenrohr aufweisen, das in der Nähe des einen Ende des Außenrohrs mit dem Ablauf oder Zulauf verbunden ist und sich bis zum andern Ende des Außenrohrs erstreckt, wo es mit einer Öffnung versehen ist. Die Temperierrohre (DE 69 03 113 U) sind dabei in einer Baukörperschicht, im Falle von Fußböden in einer Estrichschicht verlegt, d.h. eingegossen, und können daher nicht in Mauerwerk verwendet werden.

Ausgehend von diesem Stand der Technik besteht eine Lösung der Erfindung darin, dass die Kanäle röhrenförmige Hohlräume in Mauerwerk, insbesondere aus Kalksandstein, Porenbeton, Bims oder Ziegelbaustoffen sind, dass die Temperierrohre in diese Hohlräume eingesetzt sind und dass nach dem Einführen der Temperierrohre verbleibende Zwischenräume in den röhrenförmigen Hohlräumen mit Wärme leitenden Materialien verfüllt sind.

Das System hat eine hohe Wartungsfreundlichkeit, da es selbst bei Ausfall oder Beschädigung eines Moduls weiter betrieben werden kann, während das beschädigte Modul repariert wird. Gegenüber einer Fußbodenheizung erzielt das System Energieeinsparungen durch eine niedrigere Vorlauftemperatur von ca. 4°C (1°C=1,5%). Gegenüber einer Fußbodenheizung erzielt das System Energieeinsparungen durch niedrigere Raumtemperatur um 3°C (1°C=6%) bei gleichem Wärmeempfinden. Das System schafft auf energiesparende Weise ein angenehmes Raumklima durch Strahlungswärme (keine Thermik, besonders geeignet für Allergiker). Das System erzeugt keine zusätzlichen Kosten für die Kühlkomponenten, da das Heizsystem in Massivwänden 1:1 als Kühlsystem nutzbar ist. Das System schafft einen angenehmen, zugluftfreien Kühleffekt (keine Thermik) durch ideale Temperaturübertragung der Kühlung von den Wänden auf den Raum. Der Betrieb ist völlig geräuschfrei und es kommen keine gefährlichen bzw. die Natur gefährdenden Chemikalien zum Einsatz.

Die Erfindung kann also bei Mauerwerk angewendet werden, das röhrenförmige Hohlräume aufweist, in die die Temperierrohre eingesetzt werden. Um einen guten Wärmeübergang von den Temperierrohren zum Mauerwerk zu schaffen, werden nach dem Einführen der Temperierrohre verbleibende Zwischenräume in den röhrenförmigen Kanälen mit Wärme leitenden Materialien verfüllt. Hierfür sind unter anderem Quarzsand, Wärme leitende Elastomere oder andere Wärme leitenden Materialien geeignet.

Die Temperierrohre können insbesondere von oben in die Kanäle eingesetzt werden und müssen nur oben mit Zulauf und Ablauf verbunden werden. Im unteren Bereich der Wand sind keine Anschlüsse erforderlich, was schon den Bau der Wände bzw. des Gebäudes erleichtert. Durch das Außenrohr strömt dann die erwärmte oder gekühlte Temperierflüssigkeit nach unten und kehrt durch das Innenrohr zurück und wird dann wiederum oben abgeführt. Eine umgekehrte Durchströmung ist zwar denkbar, aber weniger vorteilhaft. Dabei findet ein Wärmeaustausch mit dem Mauerwerk statt, das erwärmt beziehungsweise gekühlt wird.

Eine besonders einfache und zweckmäßige Bauform der Temperierungsmodule zeichnet sich dadurch aus, dass mehrere parallel angeordnete Temperierrohre modulartig (z.B. 3er, 4er, 5er) durch an dem einen Ende angeordnete Zulauf- und Ablaufleitungen verbunden sind. Dadurch wird die Zahl der Verbindungen und Rohrleitungen für den Vorlauf und Rücklauf, die an.der Baustelle hergestellt bzw. installiert werden müssen sehr stark verringert, was zu einer deutlichen Erhöhung der technischen Sicherheit sowie einer Zeitersparnis bei der Herstellung der Verbindungen führt. Die zu Modulen parallel angeordneten Temperierrohre, deren Abstand dem Abstand der Kanäle im Mauerwerk entspricht, können einfach und flexibel in die Kanäle das Mauerwerks eingesetzt werden, was zu einer deutlichen Reduzierung der Installationszeit führt und ein Höchstmaß an Flexibilität bei der Gestaltung des Baukörpers, sogar noch während der Bauphase gewährleistet (was z.B. bei Fertigbauteilen nicht gegeben ist).

Ein weiterer Vorteil der modularen Bauweise besteht darin, dass einzelne Module getrennt aktiviert werden können, was zu einer besseren Steuerung des Systems führt und den Energiebedarf des Gebäudes senkt. So könnte man zum Beispiel eine Wand, die Sonnenstrahlung ausgesetzt ist, kühlen, während andere Wände gar nicht temperiert oder im Extremfall sogar erwärmt werden.

Bei einer weiteren Lösung der erfindungsgemäßen Aufgabe werden die röhrenförmigen Kanäle im Mauerwerk für die Be- und Entlüftung verwendet, indem diese Kanäle im Mauerwerk mit Zuluftleitungen und Abluftleitungen verbunden werden, wobei dann die Wände Bohrungen aufweisen, durch die die zugeführte Luft aus den Kanälen in den Raum einströmen bzw. durch die Kanäle aus diesem Raum herausströmen kann. Zweckmäßigerweise wird man dabei die Zuluft und die Abluft auf verschiedenen Seiten der Räume vorsehen, sodass diese von der Luft durchströmt werden. Wegen der großen Anzahl von Kanälen und Öffnungen tritt dabei die Luft aus sehr vielen Öffnungen aus bzw. tritt in sehr viele Öffnungen ein, sodass eine wirkungsvolle Lüftung trotz niedriger Strömungsgeschwindigkeiten erreicht werden kann. Für die Luftförderung sind dabei entsprechende Ventilatoren oder Gebläse, nämlich Druckgebläse und/oder Sauggebläse vorzusehen. Dabei kann insbesondere als Systemvorteil hervorgehoben werden, dass nicht nur die der Be- und Entlüftung dienenden Kanäle in Mauerwerk eingesetzt sind, sondern auch die erwähnten röhrenförmigen Kanäle, in die die Temperiermodule eingesetzt sind.

Zweckmäßigerweise sind die in den Wänden verlaufenden röhrenförmigen Kanäle vertikal ausgerichtet. Dies hat gegenüber einer horizontalen Ausrichtung den Vorteil, dass die Temperierrohre leichter und ohne große Reibung eingeführt werden können. Die Anschlüsse befinden sich dann im oberen Ende der Wand, wo sie innerhalb der Geschossdecken mit den entsprechenden Leitungen versehen werden können.

Zweckmäßigerweise verlaufen die Kanäle in Außenwänden im inneren Drittel dieser Wände, sodass nach innen eine gute Erwärmung bzw. Kühlung stattfindet, während man nach außen die isolierende Wirkung des größeren Teils der Wanddicke hat.

Als besonders vorteilhaft hat es sich erwiesen, wenn das Mauerwerk in Außenwänden an der Außenseite Material mit höherer Wärmedämmung als an der Innenseite und/oder Material mit höherer Wärmeleitfähigkeit an der Innenseite als an der Außenseite aufweist.

Dabei kann für das gesamte Mauerwerk das gleiche Material (z.B. Porenbetonsteine) verwendet werden, die an der Außenseite z.B. größere Poren, also mehr Luft und damit bessere Wärmedämmung haben. Auf der Innenseite könnten die Porenbildungssteine dann z.B. mit Metalleinlagen versehen sein, um die Wärmeleitfähigkeit zu erhöhen.

Bei einer anderen vorteilhaften Ausführungsform besteht das Mauerwerk aus unterschiedlichen Materialien, ist also insbesondere sandwichartig aus mehreren unterschiedlichen Schichten aufgebaut.

Zweckmäßigerweise wird, wenn geheizt wird, die Abluft zur Wärmerückgewinnung über einen erfindungsgemäßen Wand-Wärmetauscher geleitet, der durch die Zuluft und Abluft im Gegenstrom durchströmt wird. Bei einer vorteilhaften Ausführungsform weist dieser erfindungsgemäß parallel zu einander angeordnete, insbesondere schlangenförmig angeordnete Röhren für die Zuluft und Abluft auf, die in einem länglichen Betonelement eingegossen oder in ein längliches Kalksandsteinelement oder Mauerwerkelement eingebaut sind. Man hat so, ohne dass viele Verzweigungen nötig sind, trotz verhältnismäßig großer Rohrquerschnitte eine gute Wärmetauscherwirkung.

Der erfindungsgemäße Wärmetauscher aus Beton, Kalksandstein oder Mauerwerk erstreckt sich dabei zweckmäßigerweise zumindest über eine Geschosshöhe, zweckmäßigerweise sogar über mehrere Geschosshöhen, um die Effizienz des Wärmetauschers entsprechend groß zu machen.

Die für die Heizung und Warmwasseraufbereitung erforderliche Wärme kann insbesondere durch ein in die Erde eingeführtes Wärmerohr zur Ausnutzung der Erdwärme mit Hilfe einer Wärmepumpe gewonnen werden. In einem solchen Wärmerohr verdampft im unteren, durch die Erdwärme wärmeren Teil eine Flüssigkeit, die sich am oberen Ende, wo durch die Wärmepumpe Wärme entzogen wird, wieder kondensiert und dann an den Wänden nach unten läuft, um erneut verdampft zu werden (DE 39 06 135 A1).

Solche Wärmerohre werden üblicherweise aus Metall gefertigt. Als besonders vorteilhaft verlässt sich dabei erwiesen, dass die aus Kunststoff, insbesondere Polyethylen oder Propylen bestehen. Erstaunlicherweise haben sich dabei Kunststoffe, insbesondere das Polyethylen oder Propylen als ausreichend dampfdiffusionsdicht erwiesen, so dass auf die wesentlich aufwendigere Konstruktion mit Metallrohren verzichtet werden kann. Insbesondere sind die Rohre aus einem Kunststoff hergestellt, der dampfdiffusionsdicht ist. Als Arbeitsflüssigkeit bzw. -gas hat sich im Zusammenhang mit Wärmerohren aus Kunststoff wegen des niedrigen Arbeitsdrucks R404A als vorteilhaft erwiesen.

Bei einer anderen vorteilhaften Ausführungsform oder zusätzlich kann das Temperierungssystem Solarkollektoren zur Wärmegewinnung und Einrichtungen aufweisen, mit denen die Wärmeenergie mehrstufig fast vollständig ausgenutzt wird. Dies geschieht zunächst durch Brauchwassererwärmung im Temperaturbereich oberhalb 60° C, anschließend zur Gebäudeerwärmung im Bereich von 20° C bis 60° C. Die entsprechend abgekühlte Flüssigkeit kann dann zur Reduzierung des Transmissionswärmeverlusts gegen das Erdreich in die Gebäudesohle eingespeist werden, und zwar mit einem Temperaturbereich zwischen 15° C und 20° C. Schließlich wird die Restwärme zur Leistungsoptimierung der Geothermieanlage genutzt, wobei die gesamte für die Wärmepumpe verwendete Energie geringer wird und/oder die erforderliche Erdsondenlänge reduziert werden kann.

Das Wärmerohr dient in erster Linie zur Gewinnung von Erdwärme. Es ist erfindungsgemäß auch möglich, Wärmerohre waagerecht zu verlegen, um Wärme zum Beispiel vom zentralen Bereich eines Gebäudes zum mehr nach außen liegenden Teil zu transportieren. Bei solchen Wärmerohren, die waagerecht angeordnet sind, kann das verflüssigte Gas natürlich nicht durch Schwerkraftwirkung zurückgefördert werden. Dies geschieht vielmehr durch in das Wärmerohr eingesetzte Fliegengitter, Kupferdrahtgeflechte oder dergleichen, die eine Art Dochtwirkung ausüben, um die Flüssigkeit zum wärmeren Ende des Wärmerohrs zu leiten.

Um das Gebäude oder einzelne Wände kühlen zu können, verlegt man zweckmäßigerweise eine längere Flüssigkeitsleitung insbesondere in Form eines Schlauchs unter der Sohle des Gebäudes, genauer gesagt unter der ca. 50 cm für die Gründung erforderlichen Sandschicht. Leitet man hier die Temperierflüssigkeit durch, so wird sie gekühlt und kann dann in die Temperierrohre geleitet werden.

Durch die Erfindung wird also wie erwähnt ein Temperierungssystem geschaffen, mit dem auf sehr zweckmäßige und energiesparende Weise Gebäude beheizt und/oder gekühlt werden können. Die Be- und Entlüftung kann durch in den Wänden verlaufende Kanäle erfolgen, was ebenfalls Platz sparend ist, aber auch kaum Geräusche verursacht. Die Gefahr von Schimmelpilzbildung wegen Feuchtigkeit der umgewälzten Luft besteht dabei nicht, da im Sommer die Wände ohnehin warm sind, im Winter aber durch die erfindungsgemäßen Temperierrohre beheizt werden, falls diese vorgesehen sind. Insbesondere, wenn die Rohre usw. aus Kunststoff bestehen, besteht auch keine Korrosionsgefahr, wobei selbstverständlich diese Korrosionsgefahr für die Wände ebenfalls nicht besteht. Das System ist auch bis auf Ventilatoren und Filter aufgrund der verwendeten Baustoffe wartungsfrei. Das System ist auch kostengünstig und Zeit sparend herzustellen, da sämtliche Zu- und Abluftkanäle bzw. die Kanäle für die Temperierrohre bereits mit der Erstellung der Wände ohne zusätzlichen zeitlichen Aufwand und ohne zusätzliche Kosten hergestellt werden können.

Die Erfindung wird im folgenden anhand eine vorteilhaften Ausführungsform unter Bezugnahme auf die beigefügten Zeichnungen beispielsweise beschrieben. Es zeigen:
- Figur 1: ein erfindungsgemäßes Temperierrohrmodul;
- Figur 2: eine Detailansicht des Temperierrohrmoduls von Figur 1, teilweise weggeschnitten;
- Figur 3: ein Wandelement einer anderen Ausführungsform der Erfindung;
- Figur 4: einen erfindungsgemäßen Wärmetauscher im Längsschnitt;
- Figur 5: den Wärmetauscher der Figur 3 im Querschnitt; und
- Figur 6: ein Diagramm zur Verdeutlichung der Ausnutzung der Solarwärme.

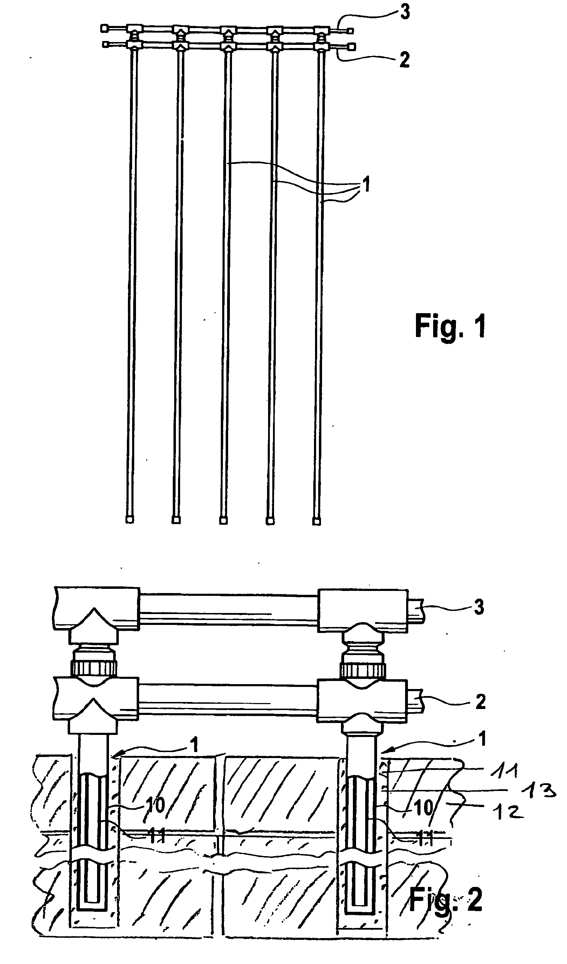

Wie dies in Figur 1 und 2 gezeigt ist, besteht das Temperierrohrmodul aus Temperierrohren 1, die unten geschlossen, parallel angeordnet und am oberen Ende durch eine Zulaufleitung 2 verbunden sind. In den Außenrohren 10 befindet sich dabei ein bis zum Boden der Außenrohre 10 reichendes, in Figur 2 gezeigtes Innenrohr 11, das koaxial mit dem Außenrohr 10 ausgerichtet ist und dessen obere Öffnung mit einer Ablaufleitung 3 verbunden ist. Die erwärmte oder gekühlte Temperierflüssigkeit strömt also durch die Zulaufleitungen 2 in die Außenrohre 10 der Temperierrohre 1 ein, strömt bis zum unteren Ende und wird von dort durch das koaxiale Innenrohr 11 wieder nach oben zur Ablaufleitung 3 zurückgeführt. Das Außenrohr 10 wird dadurch erwärmt bzw. gekühlt und kann diese Wärme an die Wand abgeben bzw. die Wand kühlen.

Figur 2 zeigt eine Detaildarstellung, die die Verbindung der Temperierrohre 1 mit der Zulaufleitung 2 (Vorlauf) der Ablaufleitung (Rücklauf) 3 sowie das Innenrohr 11 zeigt. Außerdem ist dort gezeigt, dass die Temperierrohre 1 in Kanäle 11 von Mauerwerksteinen 12 eingesetzt sind, wobei der Zwischenraum zwischen dem Temperierrohren 1 und den Mauerwerksteinen 12 in den Kanälen 11 durch ein wärmeleitendes Material 13 verfüllt ist.

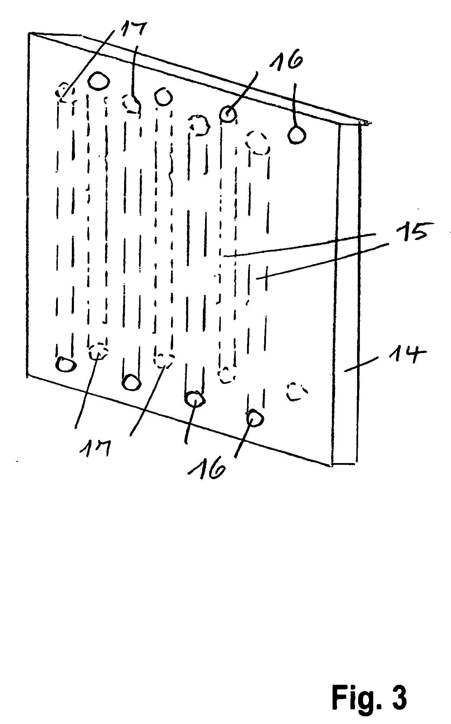

Figur 3 zeigt ein Wandelement 14, das mit Kanälen 15 versehen ist, die der Lüftung und Entlüftung dienen. Zu diesem Zweck sind die Kanäle 15 mit nach außen führenden Öffnungen 16 versehen, durch die die Luft eingesaugt oder ausgeblasen wird. Die Kanäle 15 sind dabei mit Öffnungen 17 an Lüftungs- oder Entlüftungsleitungen angeschlossen

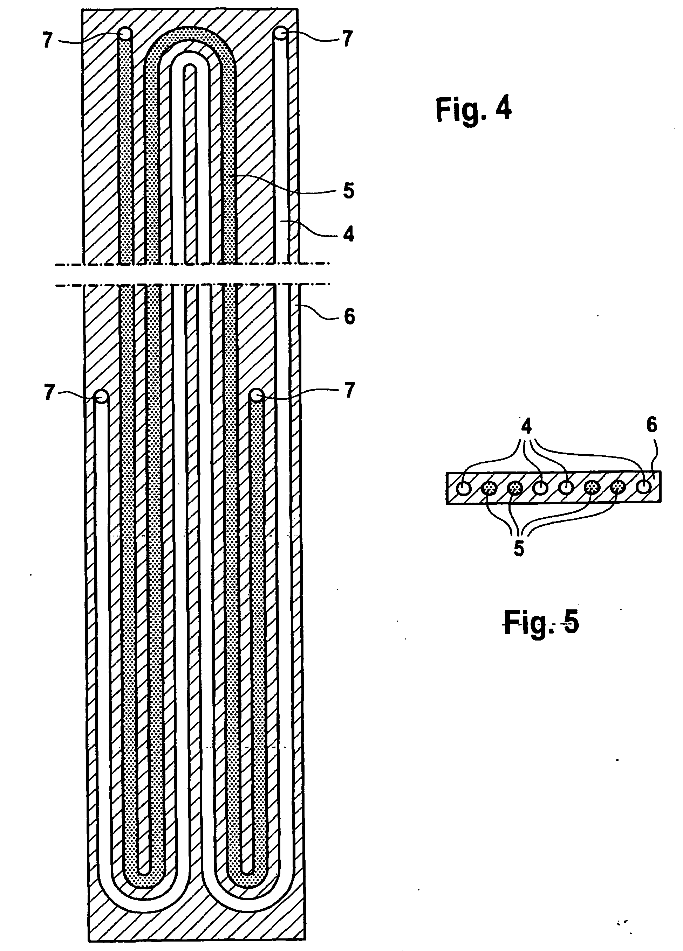

Figur 4 zeigt im Querschnitt einen Wärmetauscher, der parallele schlangenförmig angeordnete Röhren 4 und 5 aufweist. Diese Röhren 4 und 5 sind in einen länglichen Betonblock 6 eingegossen, der sich nach Fertigstellung des Temperierungssystems bzw. des Gebäudes über zumindest ein Stockwerk, vorteilhafter Weise sogar über mehrere Stockwerke erstreckt. Die warme Abluft und die kalte Zuluft werden dabei durch Öffnungen 7 in die Röhren 4 und 5 eingeleitet bzw. aus diesen heraus geleitet. Dieser Wärmetauscher könnte auch benutzt werden, wenn bei sehr hohen Außentemperaturen das Gebäude gekühlt wird.

Figur 5 zeigt einen Querschnitt durch den Wärmetauscher der Figur 3, wo noch einmal deutlich die nebeneinander liegenden Röhren 4 und 5 gezeigt sind.

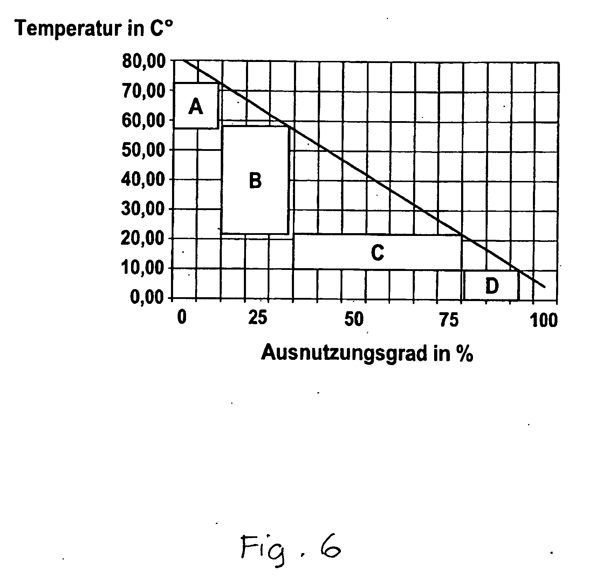

Figur 6 zeigt, wie bei Verwendung von Solarkollektoren die Wärme sehr effizient ausgenutzt werden kann.

Die durch die Solarkollektoren erwärmte Flüssigkeit wird zunächst im Temperaturbereich A für Brauchwassererwärmung verwendet. Der Bereich B dient zur Erwärmung des Gebäudes. Der Bereich C schließlich dient zur Reduzierung der Transmissionswärmeverluste gegen das Erdreich; hier wird das in der Solaranlage zirkulierende Wasser oder die sonstige Flüssigkeit durch die Sohle des Gebäudes geleitet. Der Bereich D schließlich dient zur Leistungsoptimierung der Erdwärmeausnutzung, indem restliche Wärme an den Boden abgegeben wird. Die in der Figur gezeigten Temperaturbereiche sind dabei nur Beispiele.

## Patentansprüche

1. Temperierungssystem für ein Gebäude, wobei das Temperierungssystem Wände mit in den Wänden verlaufenden röhrenförmigen Kanälen umfasst, in die von einer temperierten Flüssigkeit durchströmte Temperierrohre (1) eingesetzt sind, die mit einem Zulauf (2) und einem Ablauf (3) verbunden sind, wobei die Temperierrohre (1) ein Außenrohr (10), das an seinem einen Ende geschlossen ist und an seinem anderen Ende mit dem Zulauf (2) oder Ablauf (3) verbunden ist, sowie ein darin koaxial angeordnetes Innenrohr (11) aufweisen, das in der Nähe des einen Ende des Außenrohrs mit dem Ablauf (3) oder Zulauf (2) verbunden ist und sich bis zum andern Ende des Außenrohrs erstreckt, wo es mit einer Öffnung versehen ist, **dadurch gekennzeichnet, dass** die Kanäle röhrenförmige Hohlräume (11) in Mauerwerk (12), insbesondere aus Kalksandstein, Porenbeton, Bims oder Ziegelbaustoffen sind, dass die Temperierrohre (1) in diese Hohlräume (11) eingesetzt sind und dass nach dem Einführen der Temperierrohre (1) verbleibende Zwischenräume in den röhrenförmigen Hohlräumen (11) mit Wärme leitenden Materialien (13) verfüllt sind.

2. Temperierungssystem nach Anspruch 1, **dadurch gekennzeichnet, dass** mehrere parallel angeordnete Temperierrohre (1) modulartig durch an dem einen Ende angeordnete Zulauf- und Ablaufleitungen (2, 3) verbunden sind.

3. Temperierungssystem nach Anspruch 1 oder 2, **dadurch gekennzeichnet, dass** das Temperierungssystem ferner röhrenförmige Kanäle (15) aufweist, die zur Luftzu- und Abführung ausgebildet und mit in das Innere von Räumen des Gebäudes gerichteten Öffnungen (16) versehen sind.

4. Temperierungssystem nach einem der Ansprüche 1 bis 3, **dadurch gekennzeichnet, dass** zwischen röhrenförmigen Kanälen (11), in die Temperierrohre (1) eingesetzt sind, weitere röhrenförmige Kanäle (15) zur Luftzu- und Abführung ausgebildet und mit in das Innere von Räumen des Gebäudes gerichteten Öffnungen (16) versehen sind.

5. Temperierungssystem nach einem der Ansprüche 1 bis 4, **dadurch gekennzeichnet, dass** die in Wänden verlaufenden röhrenförmigen Kanäle (11, 16) vertikal ausgerichtet sind.

6. Temperierungssystem nach einem der Ansprüche 1 bis 5, **dadurch gekennzeichnet, dass** die Kanäle (11, 16) in Außenwänden im inneren Drittel dieser Wände (14) angeordnet sind.

7. Temperierungssystem nach einem der Ansprüche 1 bis 6, **dadurch gekennzeichnet, dass** das Mauerwerk (12) in Außenwänden an der Außenseite Material mit höherer Wärmedämmung als an der Innenseite und/oder Material mit höherer Wärmleitfähigkeit an der Innenseite als an der Außenseite aufweist.

8. Temperierungssystem nach Anspruch 7, **dadurch gekennzeichnet, dass** das Mauerwerk (12) aus unterschiedlichen Materialien besteht.

9. Temperierungssystem nach einem der Ansprüche 3 bis 8, **dadurch gekennzeichnet, dass** es mindestens einen Wärmetauscher (4 - 7) aufweist, der durch die Zuluft und Abluft im Gegenstrom durchströmt wird und parallel zueinander angeordnete, insbesondere schlangenförmig angeordnete Röhren (4, 5) für die Zuluft und Abluft aufweist, die in einem länglichen Betonelement (6) eingegossen sind.

10. Temperierungssystem nach einem der Ansprüche 1 bis 9, **dadurch gekennzeichnet, dass** die Temperierrohre (1)aus Kunststoff, insbesondere Polyethylen oder Propylen bestehen.

11. Temperierungssystem nach einem der Ansprüche 1 bis 10, **dadurch gekennzeichnet**, das die Temperierrohre (1), schweißbar und bis 40°C dampfdiffusionsdicht sind.

12. Temperierungssystem nach einem der Ansprüche 1 bis 11, **dadurch gekennzeichnet, dass** es ein in die Erde eingeführtes Wärmerohr zur Ausnutzung der Erdwärme und eine Wärmepumpe aufweist.

13. Temperierungssystem nach 12, **dadurch gekennzeichnet, dass** das Wärmerohr aus Kunststoff, insbesondere Polyethylen oder Propylen bestehen.

14. Temperierungssystem nach Anspruch 12 oder 13, **dadurch gekennzeichnet**, das Wärmerohr schweißbar und bis 40°C dampfdiffusionsdicht sind.

## Claims

1. Temperature control system for a building, wherein the temperature control system comprises walls having tubular ducts which extend in the walls and into which temperature control tubes (1), through which a temperature-controlled liquid flows, are inserted, which temperature control tubes are connected to an inlet (2) and an outlet (3), wherein the temperature control tubes (1) have an outer tube (10) which is closed at one of its ends and is connected at its other end to the inlet (2) or outlet (3), and an inner tube (11) which is arranged coaxially in the outer tube, which inner tube is connected to the outlet (3) or inlet (2) in the vicinity of one end of the outer tube and extends up to the other end of the outer tube, where it is provided with an opening, **characterized in that** the ducts are tubular cavities (11) in brickwork (12), in particular of lime-sand brick, aerated concrete, pumice or brick building materials, **in that** the temperature control tubes (1) are inserted into said cavities (11), and **in that** interspaces which remain in the tubular cavities (11) after insertion of the temperature control tubes (1) are filled with heat-conducting materials (13).

2. Temperature control system according to Claim 1, **characterized in that** a plurality of temperature control tubes (1) arranged in parallel are connected in a modular manner by inlet and outlet lines (2, 3) arranged at one end.

3. Temperature control system according to Claim 1 or 2, **characterized in that** the temperature control system also has tubular ducts (15) which are formed for air supply and discharge and are provided with openings (16) directed into the interior of rooms of the building.

4. Temperature control system according to one of Claims 1 to 3, **characterized in that** further tubular ducts (15) for air supply and discharge are formed between tubular ducts (11) into which temperature control tubes (1) are inserted, and are provided with openings (16) directed into the interior of rooms of the building.

5. Temperature control system according to one of Claims 1 to 4, **characterized in that** the tubular ducts (11, 16) extending in walls are oriented vertically.

6. Temperature control system according to one of Claims 1 to 5, **characterized in that** the ducts (11, 16) are arranged in outer walls in the inner third of these walls (14).

7. Temperature control system according to one of Claims 1 to 6, **characterized in that** in outer walls the brickwork (12) comprises material with higher heat insulation on the outer side than on the inner side and/or comprises material with a higher thermal conductivity on the inner side than on the outer side.

8. Temperature control system according to Claim 7, **characterized in that** the brickwork (12) consists of different materials.

9. Temperature control system according to one of Claims 3 to 8, **characterized in that** it has at least one heat exchanger (4-7) through which the supply air and exhaust air flow in countercurrent and has tubes (4, 5) for the supply air and exhaust air which are arranged parallel to one another, in particular being arranged in a serpentine manner, which tubes are cast in an elongate concrete element (6).

10. Temperature control system according to one of Claims 1 to 9, **characterized in that** the temperature control tubes (1) consist of plastic, in particular polyethylene or propylene.

11. Temperature control system according to one of Claims 1 to 10, **characterized in that** the temperature control tubes (1) are weldable and vapour-diffusion-tight up to 40°C.

12. Temperature control system according to one of Claims 1 to 11, **characterized in that** it has a heat tube introduced into the earth for utilizing the earth's heat, and a heat pump.

13. Temperature control system according to Claim 12, **characterized in that** the heat tube consists of plastic, in particular of polyethylene or propylene.

14. Temperature control system according to Claim 12 or 13, **characterized in that** the heat tube is weldable and vapour-diffusion-tight up to 40°C.

## Revendications

1. Système de régulation de température pour un bâtiment, le système de régulation de température comprenant des canaux tubulaires dans les murs, dans lesquels sont insérés des tubes de régulation de température (1) parcourus par un fluide régulé en température, qui sont reliés avec une entrée (2) et une sortie (3), les tubes de régulation de température (1) comprenant un tube externe (10), qui est fermé au niveau d'une de ses extrémités et qui est relié, au niveau de son autre extrémité, avec l'entrée (2) ou la sortie (3), ainsi qu'un tube interne (11) disposé de manière coaxiale à intérieur, qui est relié, à proximité d'une des extrémités du tube externe, avec la sortie (3) ou l'entrée (2) et s'étend jusqu'à l'autre extrémité du tube externe, où il est muni d'une ouverture, **caractérisé en ce que** les canaux sont des espaces creux (11) de forme tubulaire dans la maçonnerie (12), plus particulièrement en chaux calcaire, en béton poreux, en pierre ponce ou en brique, **en ce que** les tubes de régulation de température (1) sont insérés dans ces espaces creux (11) et **en ce que**, après l'introduction des tubes de régulation de température (1), les espaces intermédiaires résiduels sont remplis, dans les espaces creux tubulaires (11), avec des matériaux thermoconducteurs (13).

2. Système de régulation de température selon la revendication 1, **caractérisé en ce que** plusieurs tubes de régulation de température (1) parallèle sont reliés, à la manière d'un module, par des conduites d'entrée et de sortie (2, 3) disposées à une extrémité.

3. Système de régulation de température selon la revendication 1 ou 2, **caractérisé en ce que** le système de régulation de température comprend en outre des canaux tubulaires (15) conçus pour l'entrée et la sortie d'air et munis d'ouvertures (16) orientées vers l'intérieur de pièces du bâtiment.

4. Système de régulation de température selon l'une des revendications 1 à 3, **caractérisé en ce que**, entre des canaux tubulaires (11), dans lesquels les tubes de régulation de température (1) sont insérés, sont prévus d'autres canaux tubulaires (15) conçus pour l'entrée et la sortie d'air et munis d'ouvertures (16) orientés vers l'intérieur de pièces du bâtiment.

5. Système de régulation de température selon l'une des revendications 1 à 4, **caractérisé en ce que** les canaux tubulaires (11, 16) qui s'étendent dans les murs sont orientés verticalement.

6. Système de régulation de température selon l'une des revendications 1 à 5, **caractérisé en ce que** les canaux (11, 16) sont disposés dans des murs extérieurs, dans le tiers interne de ces murs (14).

7. Système de régulation de température selon l'une des revendications 1 à 6, **caractérisé en ce que** la maçonnerie (12) comprend, dans les murs extérieurs, au niveau de leur côté externe, un matériau avec une isolation thermique supérieure au côté interne et/ou un matériau avec une conductivité thermique du côté interne supérieure au côté externe.

8. Système de régulation de température selon la revendication 7, **caractérisé en ce que** la maçonnerie (12) est constituée de différents matériaux.

9. Système de régulation de température selon l'une des revendications 3 à 8, **caractérisé en ce qu'**il comprend au moins un échangeur thermique (4 à 7) qui est traversé par de l'air admis et de l'air évacué à contre-courant et des tubes (4, 5) parallèles entre eux, plus particulièrement en formant des boucles pour l'air admis et l'air évacué, qui sont coulés dans un élément de béton (6) oblong.

10. Système de régulation de température selon l'une des revendications 1 à 9, **caractérisé en ce que** les tubes de régulation de température (1) sont constitués d'une matière plastique, plus particulièrement de polyéthylène ou de propylène.

11. Système de régulation de température selon l'une des revendications 1 à 10, **caractérisé en ce que** les tubes de régulation de température (1) sont soudables et sont étanches à la diffusion de vapeur jusqu'à 40°C.

12. Système de régulation de température selon l'une des revendications 1 à 11, **caractérisé en ce qu'**il comprend un tube thermique introduit dans la terre pour l'exploitation de la géothermie et une pompe à chaleur.

13. Système de régulation de température selon la revendication 12, **caractérisé en ce que** le tube thermique est constitué d'une matière plastique, plus particulièrement de polyéthylène ou de propylène.

14. Système de régulation de température selon la revendication 12 ou 13, **caractérisé en ce que** le tube thermique est soudable et étanche à la diffusion de vapeur jusqu'à 40°C.
